# EUROPÄISCHE PATENTSCHRIFT

(11) **EP 1 833 655 B1**
(45) Veröffentlichungstag und Bekanntmachung des Hinweises auf die Patenterteilung: **23.11.2011**
(21) Anmeldenummer: 05730282.0
(22) Anmeldetag: 11.04.2005
(51) Int. Cl.: B29C 47/32, B29C 47/10, B29C 43/22, B29C 43/46, B29C 43/48, B29C 59/02, B29C 59/04, A44B 18/00

(54) **Verfahren zum Herstellen einer Trägerbahn aus Kunststoff**
Method for the production of a support web made of plastic
Procede de fabrication d'une bande support en plastique

(30) Priorität: 23.12.2004 DE 102004062042
(43) Veröffentlichungstag der Anmeldung: 19.09.2007
(73) Patentinhaber: Gottlieb Binder GmbH & Co. KG, 71088 Holzgerlingen (DE)
(72) Erfinder: TUMA, Jan, 71083 Herrenberg (DE)
(74) Vertreter: Bartels, Martin Erich Arthur
(86) Internationale Anmeldenummer: PCT/EP2005/003778
(87) Internationale Veröffentlichungsnummer: WO 2006/074705

(56) Entgegenhaltungen:
- EP-A- 0 348 907
- AT-B- 400 316
- US-A- 3 051 995
- US-A- 4 978 486
- US-A- 5 077 870
- US-A1- 2003 135 964
- US-A1- 2004 229 739
- US-B1- 6 592 800

## Beschreibung

Die Erfindung betrifft ein Verfahren zum Herstellen einer Trägerbahn, bestehend aus einer vorgebbaren Menge an Kunststoffmaterial mit einer Vielzahl an Formelementen, die in Formhohlräumen eines Formwerkzeuges geformt werden, wobei das Kunststoffmaterial über mindestens eine Extruderdüse einer Extrudereinrichtung dem Formwerkzeug zugeführt wird.

Durch die WO 02/13647 A2 ist ein Verfahren zum Herstellen eines Haftverschlußteils bekannt, mit einer Vielzahl von einstückig mit einer Trägerbahn verbundenen und symmetrisch aufgebauten Formelementen in Form von Verhakungsmitteln in der Art jeweils eines mit einem Kopfteil versehenen Stieles, bei dem ein formbarer Werkstoff in eine Formgebungszone zwischen einem Druckwerkzeug und einem Formwerkzeug zugeführt wird. Bei dem bekannten Verfahren werden zumindest in einem Längsschnitt des jeweiligen Formhohlraumes gesehen die einander gegenüberliegenden Begrenzungswände durchgehend mit einem konvexen Bahnverlauf versehen, wobei ein stetig verlaufender Übergang zwischen den Querschnittsformen von Stiel- und Kopfteil für ein Verhakungsmittel des Trägers erreicht ist, so dass es zu einem hemmfreien Entformungsprozess kommt.

Bei dem dahingehenden Verfahren wird ein geeignetes Kunststoffgranulat über eine Extrudereinrichtung plastifiziert und zur Abgabe an das Formwerkzeug einer Extruderdüse der Extrudereinrichtung zugeführt. Das dahingehend eingesetzte Kunststoffmaterial führt in der Regel zu farblosen Haftverschlußteilen, die eingeschränkt lichtdurchlässig sind. Soll das fertige Haftverschlußprodukt eingefärbt sein, besteht die Möglichkeit, das eingesetzte Kunststoffgranulat bereits gefärbt zu beziehen und dergestalt dem Herstellprozeß (Masterbatch) zuzuführen oder Farbpigmente, beispielsweise in Form von Titandioxid, zur Weißfärbung dem Kunststoffgranulat beizumengen und dergestalt dem Herstellprozeß zuzuführen. Da die hierfür jeweils eingesetzten Farben nebst Farbpigmenten von ihrem chemischen und mechanischen Verhalten dem Verarbeiter nicht genau bekannt sind und herstellerseitig vorgegeben werden, kann es beim eigentlichen Ablauf des Herstellungsverfahrens zu Problemen kommen, insbesondere was das Ausbringen der einzelnen fertigen Formelemente aus den Formhohlräumen des Formwerkzeuges anbelangt.

So hat es sich gezeigt, dass beim Eintrag weißer Farbe in Form von Titandioxid-Farbpigmenten sich der in Gramm pro 10 min gemessene Schmelzflußindexwert (= Meltflowindex, MFI) für das Kunststoffmaterial deutlich verschlechtert mit der Folge, dass das dahingehende Einfärbeverfahren im Masterbatchbetrieb für sog. Mikrohaftverschlüsse überhaupt nicht einsetzbar ist, weil sich dergestalt aufgrund des sehr schlechten Fließverhaltens des Kunststoffes in die ausgesprochen geometrisch kleinen Kavitäten (Formhohlräume) des Formwerkzeuges nicht mehr einbringen läßt. In der Praxis vorgenommene Versuche, das Einformverhalten dann dahingehend zu verbessern, dass man die Einformtemperatur für das plastifizierte Kunststoffmaterial erhöht, führt aber regelmäßig dazu, dass Temperaturbereiche erreicht sind, die das Kunststoffmaterial schädigen und das Herstellen des Haftverschlußproduktes im skizzierten Größenrahmen gar unmöglich machen. Auch ist es schwierig, ohne größere Reinigungsarbeiten an der Extrudereinrichtung vorzunehmen, während des Herstellprozesses, der quasi-kontinuierlich verläuft, von einer Farbe auf die nächste für das fertige Haftverschlußprodukt umzustellen.

Um dem zu begegnen, ist im Stand der Technik UP 07213310 A, JP 02283305 A und WO 00/73063 A1) bereits vorgeschlagen worden, männliche und/oder weibliche Eingreifteile von Haftbandverschlüssen mittels sog. Ink-Jet- oder elektrostatischer Auftragverfahren zu färben und/oder zu bedrucken; zum einen ist eine weitgehende Gestaltungsfreiheit beim Farbauftrag bei diesen Verfahren aber gleichfalls nicht möglich und zum anderen sind diese Verfahren nur wirtschaftlich durchführbar, wenn große Mengen herzustellenden Verschlußmaterials mit einer Farbe eingefärbt werden. Auch finden die dahingehenden Verfahren wiederum ihre Anwendungsgrenzen, sofern sog. Mikrohaftverschlüsse dergestalt eingefärbt werden sollen.

Zwar ist es durch die US 6,136,046 A weiter bekannt, als sog. Ink-jet-Farbauftragverfahren neben elektrostatisch wirkenden Systemen und Ultraschallsystemen auch piezoresistive Elementsysteme zum Farbauftragen zu benutzen; allein auch diese Verfahren finden ihre Anwendungsgrenzen, sofern Haftverschlüsse damit einzufärben sind, da vorspringende Kopfteile an den Enden der Verschlußstiele mit diesen Hinterschnitte bilden, die von einem von außen kommenden Farbauftrag nur schwer abzudecken sind. Wird bekanntermaßen die Farbe auch nur auf der Oberseite des Haftverschlußmaterials aufgebracht, fällt diese grundsätzlich einer Abnutzung anheim, die langfristig zum Entfärben des Verschlußproduktes führt. Vergleichbare Verhältnisse liegen vor, wenn man das Verschlußmaterial mit Farbe bedruckt oder die Farbe auf das Verschlußmaterial aufrakelt. Auch kommt es häufig ungewollt zu Schlierenbildung und zu Problemen beim Abtrocknen der Farbe, was zu Qualitätseinbußen führt. Um eine sichere Anhaftung der Farbe überhaupt gewährleisten zu können, sind "Primerung" und/oder zusätzliche Oberflächenbehandlungsverfahren notwendig.

Durch die EP-B-1 455 996 ist ein Verfahren zum indirekten Bedrucken eines thermoplastischen Films mit einer Gruppe von Vorsprüngen bekannt und einer Fläche zwischen den Vorsprüngen, wobei das Verfahren die folgenden Schritte umfaßt:
a. Bereitstellen einer erwärmten thermoplastischen Schmelze;
b. Bereitstellen eines Werkzeugs mit einem formgebenden Abschnitt mit einer Fläche und mehreren Hohlräumen in der Fläche, das ein Material mit einer ausreichenden Oberflächenenergie aufweist, um Tinte freizugeben;
c. Auftragen von Tinte unter Verwendung eines Strahldrucks auf die Fläche des Werkzeugs;
d. Trocknen oder Härten der Tinte auf der Fläche des Werkzeugs;
e. In-Kontakt-Bringen der thermoplastischen Schmelze mit dem formgebenden Abschnitt, auf dem Tinte aufgetragen ist;
f. Bilden einer Gruppe von Vorsprüngen in der thermoplastischen Schmelze mit einem Aspektverhältnis, dem Verhältnis der Höhe des Vorsprungs zu der Breite des Vorsprungs an dem breitesten Abschnitt des Querschnitts des Vorsprungs, von mehr als 2:1 entsprechend den Hohlräumen in dem Werkzeug von Teil b, und einer Fläche zwischen den Vorsprüngen entsprechend der Fläche des Werkzeugs;
g. Übertragen der Tinte von der Fläche des Werkzeugs auf die thermoplastische Schmelze in der Fläche zwischen den Vorsprüngen;
h. Abschrecken der thermoplastischen Schmelze zur Bildung eines thermoplastischen Films; und
i. Entfernen des thermoplastischen Films von dem formgebenden Abschnitt, wobei die Schritte c bis i in der genannten Reihenfolge ausgeführt werden.

Mit diesem bekannten Verfahren, das mit einen den neuesten Stand der Farbgebungs-Technik bildet, lassen sich Kunststoffartikel, wie Flächenhaftverschlüsse von der Oberfläche her mit einem Farbauftrag versehen, der, was die Farbbeständigkeit in der Dauernutzung anbelangt, noch Wünsche offen läßt.

Ein weiteres verfahren zur Herstellung eines Haftverschlußproduktes ist aus der US-B1-6592800 bekannt.

Ausgehend von diesem Stand der Technik liegt der Erfindung die Aufgabe zugrunde, ein Verfahren zum Herstellen eines Haftverschlußproduktes zur Verfügung zu stellen, das ein verbessertes Einformverhalten des Kunststoffmaterials in die Kavitäten (Hohlräume) eines Formwerkzeuges erlaubt, bei vorzugsweise gleichzeitiger Reduzierung der Verarbeitungstemperatur. Eine weitere Aufgabe ist darin zu sehen, dass mit einem dahingehenden Verfahren auch gleichzeitig eine Farbgestaltung für das Haftverschlußprodukt erreicht ist. Die dahingehenden Aufgabenstellungen löst vom Grundsatz her ein Verfahren mit den Merkmalen des Patentanspruches 1 in seiner Gesamtheit.

Dadurch, dass das Kunststoffmaterial intrinsisch mit einer Flüssigfarbe versehen wird, welche aus einer Farbstoffphase und einer Gleitmittelphase gebildet ist, dass die Flüssigfarbe, mittels einer Dosiereinrichtung von außen der Extrudereinrichtung an der Stelle zugeführt wird, an der das Kunststoffmaterial zumindest teilweise plastifiziert vorliegt, so dass der Schmelzflußindex (MFI) des Kunststoffmaterials konstant bleibt, vorzugsweise ansteigt, und mittels der Gleitmittelphase das Einformverhalten des Kunststoffmaterials in die Hohlräume des Formwerkzeuges bei vorzugsweise gleichzeitig reduzierter Einformungstemperatur verbessert wird, ist ein sehr gutes Einformverhalten des Kunststoffmaterials in die jeweiligen Hohlräume eines Formwerkzeuges erreicht. Insbesondere kann eine Verarbeitungstemperatur vorgegeben werden, die das Kunststoffmaterial nicht schädigt und durch die Erhöhung des Schmelzflußindexes über den jeweiligen Zusatz wird ein verbessertes Abformverhalten der Formelemente des Haftverschlußproduktes erreicht, so dass sich auch sog. Mikro- oder Nanohaftverschlüsse mit der Größe von Formelementen im Mikro- bzw. Nanobereich herstellen lassen, insbesondere mit komplizierten Formgeometrien (ausgeprägte Hinterschnitte), wie sie mit konventionellen Verfahren bisher nicht ohne weiteres herstellbar sind.

Auch lassen sich in Abhängigkeit des gewähltes Zusatzes und mit Erhöhung des Schmelzflußindexes weitere Möglichkeiten der Beeinflussung für das Haftverschlußprodukt schaffen, wie beispielsweise die mechanischen Kennwerte Flexibilität und Zähigkeit einstellen, indem das zugegebene Additiv (Zusatz) eine sinnfällige Veränderung der Kristallitbildung im Kunststoffmaterial während des Formgebungsprozesses veranlaßt.

Dabei wird als Zusatz eine Flüssigfarbe gebildet aus einer Farbstoffphase und einer Gleitmittelphase dem Kunststoffmaterial intrinsisch zugeführt, wobei mittels der Gleitmittelphase das Einformverhalten des Kunststoffmaterials in die Hohlräume des Formwerkzeuges bei gleichzeitig reduzierter Einformungstemperatur verbessert wird. Als Gleitmittelphase können dabei Zusätze dienen, wie Fettsäureauch sog. Mikro- oder Nanohaftverschlüsse mit der Größe von Formelementen im Mikro- bzw. Nanobereich herstellen lassen, insbesondere mit komplizierten Formgeometrien (ausgeprägte Hinterschnitte), wie sie mit konventionellen Verfahren bisher nicht ohne weiteres herstellbar sind.

Als Gleitmittelphase könnend dabei Zusätze dienen, wie Fettsäureester, Fettsäureesterethoxylate, Paraffinöle, Pflanzenöle, wie biologisch abbaubares Rapsöl oder Kombinationen hiervon. Die dahingehende Gleitmittelphase stellt auch sicher, dass selbst bei erhöhten Verarbeitungstemperaturen ein sicherer Prozeßablauf gewährleistet ist, was beispielsweise bei Einsatz von lösemittelhaltigen Zusätzen im Hinblick auf deren Brennbarkeit (niedrige Zündtemperaturen) nicht gewährleistet wäre.

Besonders gute Verarbeitungsbedingungen ergeben sich dann, wenn bezogen auf das eingetragene Kunststoffmaterial der Anteil an dem Gesamtzusatz etwa 0,05 bis 5 Gew%, vorzugsweise 0,2 bis 0,6 Gew%, besonders bevorzugt um 0,5 Gew%, beträgt. Als besonders günstig hat es sich auch erwiesen, für die Konstanthaltung oder Erhöhung des Schmelzflußindexwertes als Farbstoff für die Farbstoffphase im genannten Gewichtsprozentrahmen Pigmente einzusetzen mit einer Partikelgröße <10µm. Bei dem dahingehenden Aufbau liegt dann eine Feindispersion des Pigmentmaterials in der Kunststoffmatrix, insbesondere in Form einer Polymermatrix, vor, mit der Folge, dass Migrationsvorgänge für die Farbpartikelanteile des derart aufgebauten Suspensionsverbundes weitestgehend ausgeschlossen sind. Als besonders günstig hat es sich auch erwiesen, für die Erhöhung des Schmelzflußindexwertes als Farbstoff für die Farbstoffphase im genannten Gew%-Rahmen Ultramarinblau einzusetzen.

Da das Kunststoffmaterial zur Erhöhung des Schmelzflußindexes intrinsisch mit einer Flüssigfarbe versehen wird, indem die Flüssigfarbe mittels einer Dosiereinrichtung von außen der Extrudereinrichtung an einer Stelle zugeführt wird, an der das Kunststoffmaterial zumindest teilweise plastifiziert vorliegt, kann als Ausgangsmaterial für die Extrudereinrichtung übliches Kunststoffgranulat eingesetzt werden, das von seinem Fertigungsverhalten her einschlägig bekannt und dergestalt beherrschbar ist. Sofern die Zuführung der Flüssigfarbe in das plastifizierte Kunststoffmaterial vorgesehen ist, kommt es zu einer Durchmischung desselben mit der Flüssigfarbe von innen her (intrinsisch), so dass der Durchfärbegrad für das gesamte Kunststoffmaterial gleichförmig ist.

Da das Kunststoffmaterial mittels der über die Dosiereinrichtung zugeführten Flüssigfarbe gleichförmig und durchgehend gefärbt ist, sind Abnutzungserscheinungen des Verschlußmaterials beherrschbar, ohne dass dies zu einem Entfärben desselben führt. Da die Flüssigfarbe über die Dosiereinrichtung der Extrudereinrichtung zugeführt wird, kann bei einem Farbwechsel dieser rasch vonstatten gehen und insbesondere ohne größere Reinigungsarbeiten, so dass im fortlaufenden Herstellprozeß ein Farbwechsel nur zu ausgesprochen niedrigen Ausschußraten führt. Da als Flüssigfarben eine Vielzahl an Farben einbringbar sind, sind der Gestaltungsmöglichkeit kaum Grenzen gesetzt und auch Mischfarben für ein Haftverschlußteil lassen sich dergestalt erhalten. Da sich ein sehr gleichmäßiger Farbeintrag ergibt, sind ferner die Anforderungen an eine erhöhte Produktqualität gleichfalls erfüllt.

Vorzugsweise werden als Flüssigfarben solche Farbsysteme als Farbstoffphasen eingesetzt, die neben dem eigentlichen Farbmittel und der Gleitmittelphase Bindemittel aufweisen sowie gegebenenfalls Weichmacher, mehrwertige Alkohole oder Amine sowie Alkoholethoxylate. Da die Gleitmittelphase der Flüssigfarbe lösungsmittelfrei ist, läßt sich dergestalt auch bei erhöhten Verarbeitungstemperaturen innerhalb der Extrudereinrichtung ein gefahrloser Färbebetrieb erreichen.

Bei einer besonders bevorzugten Ausführungsform des erfindungsgemäßen Verfahrens wird mittels der Dosiereinrichtung abhängig vom Plastifizierungszustand des Kunststoffmaterials und der Temperatur desselben derart eine variable Menge an Flüssigfarben zugeführt, dass ein Einfärbungsgrad für die Trägerbahn mit Formelementen gleichbleibend gestaltet wird. Über entsprechende Sensoren (Temperatur und Druck) läßt sich die Verarbeitungssituation des plastifizierten Kunststoffmaterials innerhalb der Extrudereinrichtung nachvollziehen und über eine geeignete Steuereinrichtung wird die Dosiereinrichtung derart angesteuert, dass bei verdichtetem Kunststoffmaterial ein geringerer Farbeintrag erfolgt und bei reduziertem Zusammenhalt eine geringere Farbmenge an Flüssigfarbe eingebracht wird. Hierdurch ist ein gleichförmiger Farbeintrag in das Kunststoffmaterial möglich und das später hergestellte Fertigprodukt (Haftverschlußprodukt) ist als durchgehend gleichförmig gefärbt anzusehen.

Bei einer weiteren besonders bevorzugten Ausführungsform des erfindungsgemäßen Verfahrens werden die Trägerbahn und/oder die Formelemente koextrudiert oder aus extrudierbaren Einzelschichten hergestellt. Bei einem dahingehenden Mehrschichtaufbau kann dann gegebenenfalls für jede Schicht eine eigene Farbe zugeordnet werden, so dass sich eine Vielzahl an Gestaltungsmöglichkeiten auch für coextrudierte Verschlüsse ergibt. Vorzugsweise ist dabei vorgesehen, dass bei der Coextrusion für jede Einzelschicht eine eigene Extrudereinrichtung nebst Extruderdüse und Farbdosiereinrichtung vorgesehen wird. Dergestalt ließen sich bei entsprechenden Austauschvorgängen der Farben unter den Einzelschichten auch die fortlaufenden Produktionsgeschwindigkeiten erhöhen, da innerhalb des Herstellbetriebes ein Farbwechsel für eine jede dahingehende Einzelschicht ohne weiteres möglich ist.

Die Flüssigfarbe wird innerhalb der Extrudereinrichtung mittels der Dosiereinrichtung an einer Stelle zugeführt, bei der das Kunststoffmaterial der Extruderdüse zugeführt wird. In der dahingehenden Zone der Extrudereinrichtung wird vorzugsweise mittels eines Rautenmischers od. dgl. das verdichtete Kunststoffmaterial nochmals vergleichmäßigt, so dass beim Farbeintrag an der dortigen Vergleichmäßigungsstelle dies zu einer Vergleichmäßigung des Farbeintrages am fertigen Produkt (Haftverschlußteil) führt.

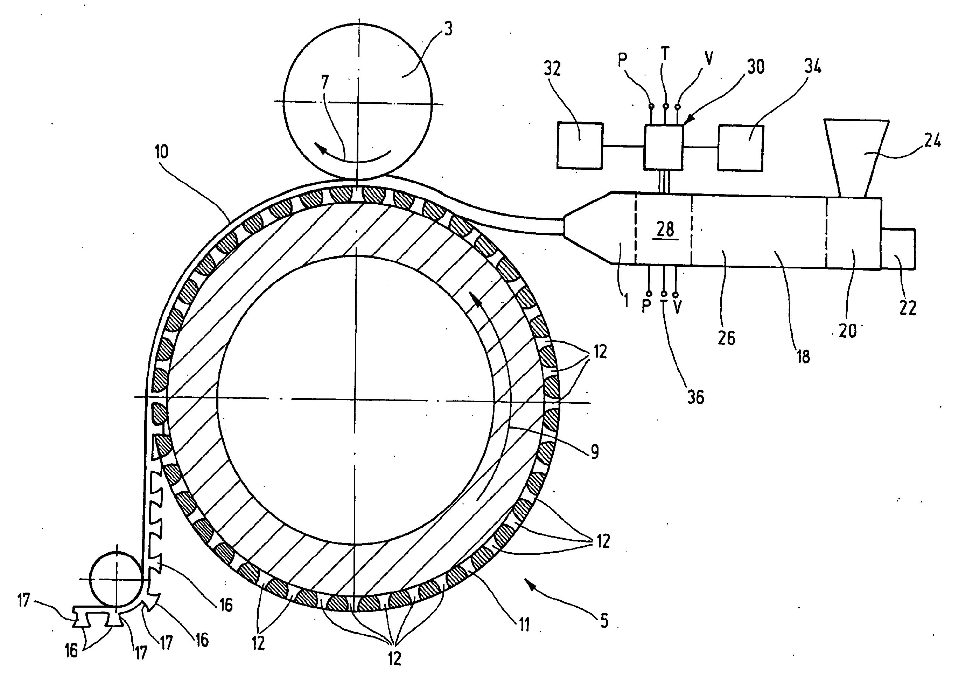

Im folgenden wird das erfindungsgemäße Herstellverfahren anhand einer Ausführungsform nach der einzigen Figur näher erläutert. Dabei zeigt in prinzipieller und nicht maßstäblicher Darstellung die dahingehende Figur eine stark schematisch vereinfachte und teils geschnitten gezeichnete Seitenansicht einer Vorrichtung zur Durchführung des erfindungsgemäßen Verfahrens.

Die Figur zeigt in schematischer Darstellung Teile einer Vorrichtung zum Durchführen des erfindungsgemäßen Verfahrens mit einem Extruderkopf 1 als Zuführeinrichtung für, in plastischem oder flüssigem Zustand befindlichen, insbesondere thermoplastischen Kunststoffmaterial, das als ein Band, dessen Breite derjenigen des herzustellenden Haftverschlußteils entspricht, einem Spalt zwischen einem Druckwerkzeug 3 und einem Formwerkzeug 5 zugeführt wird. Als Druckwerkzeug 3 ist eine Druckwalze vorgesehen und bei dem als Ganzes mit 5 bezeichneten Formwerkzeug handelt es sich um eine Formwalze. Beide Walzen sind in der Figur mit Bogenpfeilen 7 und 9 angegebenen Drehrichtungen angetrieben, so dass zwischen ihnen ein Förderspalt gebildet wird, durch den das Kunststoffband in Transportrichtung gefördert wird, während gleichzeitig Material zum Trägerband 10 des Haftverschlußteils geformt wird und das Trägerband 10 an der an der Formwalze anliegenden Seite durch die formgebenden Elemente der Formwalze, die zur Bildung von Verhakungsmitteln (Formelemente) erforderliche Formgebung erhält.

Zu diesem Zweck weist die Formwalze 5 am Umfang ein Sieb 11 auf, mit einzelnen Formhohlräumen 12. Des weiteren sind die Formhohlräume 12, was nicht näher dargestellt ist, über die Formwalze mit ihrem Sieb 11 außenumfangsseitig regelmäßig verteilt, wobei die Verteilung und die Anzahl frei wählbar sind. Insbesondere sind die Formhohlräume 12 mit Begrenzungswänden konvexen Bahnverlaufs versehen, so dass eine Art Hyperboloidstruktur entsteht, die dem herzustellenden Formelement entspricht. Mit den genannten Formhohlräumen 12 ist es also möglich, Verhakungsmittel oder Formelemente herzustellen, in Form jeweils eines mit einem Kopfteil 16 versehenen Stielteils 17. Ein dahingehender Herstellaufbau für Verhakungsmittel oder sonstige Formelemente ist üblich und beispielsweise eingehend in de WO 02/13647 A2 beschrieben, so das an dieser Stelle hierauf nicht mehr näher eingegangen wird.

Die hier zum Einsatz kommenden, zu verarbeitenden Kunststoffmaterialien können vielfältig sein, beispielsweise in Form von Polyamiden oder Polyolefinen, wie Polypropylen oder Polyethylen (HDPE, LDPE und LLDPE). Ferner kommen auch andere Thermoplaste zum Einsatz, wie Polyamide, Polyester (Polyethylenterephthalat), Polystyrene, Polycarbonate, Polymethylmethacrylate, Ethylen, Vinylacetat Copolymere einschließlich Acrylat modifizierte Ethylene, Vinylacetat Polymere und Ethylen Acryl Azid Copolymere sowie Polyethylenstyrene. Ferner ist die Anwendung von thermoplastischen Elastomeren, wie natürlich oder synthetisch herstellbarer Gummi einschließlich von Styren Block Copolymeren mit Anteilen von Isopren, Butadien oder Ethylen (Butylene)-Blocks. Ferner besteht Verwendung für metallocen-catalisiertes Polyolefin, Polyurethan oder Polydiorganosiloxane. Zur Aussteifung der Trägerbahn 10 und zur Verstärkung können duktile Thermoplaste anwendbar sein, wie Nylon oder Polyvinylchlorid. Der jeweils hergestellte Formelementartikel, insbesondere in Form des Haftverschlußteils, läßt sich auch mit Beschichtungen und Coatings versehen, die sich auch aufdampfen oder aufrakeln lassen. Ferner sind zur Herstellung einer Strukturierung im Sinne von selbstabreinigenden Oberflächen Nachbehandlungen möglich, sei es mit Laser, Ultraschall oder dergleichen mehr. Insbesondere können Herstellmaterialien eingesetzt werden, die biologisch abbaubar und solche, die besonders gut einfärbbar sind.

Im Sinne der erfindungsgemäßen Lösung wird das Kunststoffmaterial intrinsisch derart mit mit einer Flüssigfarbe, welche aus einer Farbstoffphase und einer Gleitmittelphase gebildet ist, versehen, dass der Schmelzflußindex(MFI-Wert) des Kunststoffmaterials ansteigt. Der dahingehende Schmelzflußindexwert wird regelmäßig in Gramm pro 10 Minuten gemessen. Bei der normalen Verarbeitung von thermoplastischem Kunststoffmaterial, beispielsweise in Form von Polypropylen, mit einer Probendichte von 0,905 g/cm³ergeben sich durchschnittliche MFI-Werte von ca. 61 g pro 10 Min.. Wird der Zusatz in das Kunststoffmaterial eingebracht, der den Schmelzflußindexwert erhöht, ergeben sich MFI-Werte von durchschnittlich 71, was einer Erhöhung von ca. 15 % gleichkommt. Um den dahingehenden MFI-Wertzuwachs zu erreichen, der auch deutlich höher ausfallen kann, dient als Zusatz eine Art Gleitmittelphase, das dem plastifizierten Grundstoffmaterial als weitere Phase zugeführt wird, um dergestalt das Einformverhalten des Kunststoffmaterials bei gleichzeitig reduzierter Einformungstemperatur zu verbessern. Dergestalt lassen sich auch sog. Mikro-oder Nanohaftverschlüsse mit Form- oder Verhakungselementen in der Größenordnung von Mikro- bzw. Nanometern sicher herstellen.

Vorzgusweise bildet die Flüssigfarbe ein unpolares System bildet und als Gleitmittelphase flüssige Bindemittel aufweist sowie das eigentliche Farbmittel. Ferner können in der Flüssigfarbe als System noch sog. Antiabsetzmittel vorhanden sein sowie gegebenenfalls weitere Zuschlagstoffe, beispielsweise in Form von Verarbeitungshilfen, Stabilisatoren, Antistatika, Nukleierungsmittel etc.. Als Bindemittel oder Gleitmittelphase können beispielsweise Fettsäureester und/oder Fettsäureesterethoxylathe, Paraffinöle einschließlich biologisch abbaubare Öle, wie Rapsöl, eingesetzt werden. Die Verwendung biologisch abbaubarer Öle als Gleitmittelphase hat den Vorteil, dass derart hergestellte Haftverschlußteile auch in kritischen Bereichen, wie im Windel- oder Lebensmittelbereich, Anwendung finden können. Ferner kann die Flüssigfarbe Weichmacher, mehrwertige Alkohole und/oder Amine sowie Alkoholethoxylathe einschließlich weiterer, systemspezifischer Komponenten aufweisen. Diese können entweder allein oder in Mischung eingesetzt sein. Die Wahl der Gleitmittelphase richtet sich vorzugsweise nach dem einzufärbenden thermoplastischen Kunststoffmaterial bzw. bei den Elastomeren nach der Chemie des Gesamtsystems. Sehr gute MFI-Erhöhungswerte haben sich jedenfalls erreichen lassen, sofern als Farbstoff für die Farbstoffphase Ultramarinblau eingesetzt wird.

Bei den vorzugsweise hier zum Einsatz kommenden thermoplastischen Kunststoffmaterialien haben sich vor allem Fettsäureester, Fettsäureesterethoxylathe, Paraffinöle sowie Pflanzenöle und im Falle von PVC Weichmacher bewährt. Zum Herstellen der Flüssigfarbe werden die eingewogenen Rezepturkomponenten in das betreffende Mittel eingeführt oder dispergiert und anschließend vermahlen. Bei der dahingehenden Vermahlung handelt es sich nicht um eine eigentliche Primärkornzerkleinerung, sondern lediglich um ein möglichst vollständiges Aufbrechen der Agglomarate, um damit eine optimale Dispergierung der Farbmittel im Bindemittelsystem zu erreichen.

Der bereits genannte Extruderkopf 1 mit Extruderdüse ist Teil einer als Ganzes mit 18 bezeichneten Extrudereinrichtung. Die dahingehende Extrudereinrichtung 18 weist eine nicht näher dargestellte Extruderschnecke auf, die sich von einer Eingangszone 20 bis zum Extruderkopf 1 mit Extruderdüse erstreckt. Die dahingehende Extruderschnecke wird über einen Antrieb, beispielsweise in Form eines Elektromotors 22, kontinuierlich angetrieben. An die Eingangszone 20 ist eine Eingangsstelle 24 für die Zufuhr des nicht näher dargestellten Kunststoffgranulats, beispielsweise in Form eines thermoplastischen Kunststoffmaterials, angeschlossen. Innerhalb der Extrudereinrichtung 18 schließt sich an die Eingangszone 20 eine Aufwärm- und Verdichtungszone 26 an, die an ihrer der Eingangszone 20 abgewandten Seite in eine Vergleichmäßigungszone 28 mündet, an den sich dann wiederum der Extruderkopf 1 mit Extruderdüse anschließt. Die Vergleichmäßigungszone 28 ist vorzugsweise durch einen in die Extruderschnecke integrierten Rautenmischer (nicht dargestellt) gebildet. Die Vergleichmäßigungszone 28 hat insbesondere die Aufgabe, etwaig verdichtetes Kunststoffmaterial von der Homogenität her wieder zu vergleichmäßigen, bevor das dahingehende Material ausgetragen wird.

An die Vergleichmäßigungszone 28 ist eine als Ganzes mit 30 bezeichnete Dosiereinrichtung angeschlossen, wobei die dahingehende Einrichtung in der Art einer Blackbox-Darstellung vereinfacht in der Figur wiedergegeben ist. Neben einer Steuereinrichtung 32 weist die Dosiereinrichtung 30 noch mindestens einen Farbvorratsbehälter 34 für die jeweilige Flüssigfarbe auf. Des weiteren münden in die Vergleichmäßigungszone 28 Sensoren für Druck p, Temperatur T und eventuell Geschwindigkeit v des Kunststoffmaterials mit ein, wobei die dahingehenden Ausgänge der Sensoren 36 an Eingänge der Dosiereinrichtung 30 sinnfällig angeschlossen sind. Neben den genannten Sensoren könnten noch weitere Sensoren eingesetzt werden (nicht dargestellt), beispielsweise für Viskosität etc.. Vorzugsweise ist ferner vorgesehen, an verschiedenen Stellen Drucksensoren anzuordnen, um dergestalt Druckdifferenzen ermitteln zu können, für die sinnfällige Ansteuerung der Dosiervorrichtung 30 zum Erhalt eines gleichmäßigen Farbeintrages in das Kunststoffmaterial.

Mittels der Sensoren 36 wird jedenfalls der jeweilige Betriebszustand des Kunststoffmaterials in der Vergleichmäßigungszone 28 erfaßt, und hiervon abhängig speist die Steuereinrichtung 32 im Behälter 34 bevorratetes Flüssigfarbenmittel in die Vergleichmäßigungszone 28 der Extrudereinrichtung 18 ein. Kommt es eigenschaftsbedingt zu Änderungen an dem Kunststoffmaterial, beispielsweise zu einer Verdichtung desselben, wird dann über die Dosiereinrichtung 30 weniger Flüssigfarbe zugegeben, als wenn das Kunststoffmaterial nicht zu dicht gepackt ist.

Auf diese Art und Weise wird über die Dosiereinrichtung 30 sichergestellt, dass immer gleichförmig Farbmittel in das Kunststoffmaterial gelangt, was später beim fertigen Endprodukt dazu führt, dass die Farbe durchgehend homogen eingetragen ist. Ferner erlaubt die Dosiereinrichtung 30, gegebenenfalls aus mehreren nicht näher dargestellten Farbvorratsbehältern 34 Flüssigfarbe zu entnehmen, diese zu mischen und dann in gemischter Form gleichzeitig oder alternierend in das Kunststoffmaterial einzubringen. Sofern die Trägerbahn 10 im Coextrusionsverfahren mehrschichtig aufgebaut werden soll, kann jeder Schicht eine eigene Extrudereinrichtung (nicht dargestellt) zugeordnet sein, mit eigener Dosiereinrichtung für die Flüssigfarbe, so dass sich jeder Schicht dem Grunde nach eine eigene Farbgebung zuordnen lassen würde. Da die Wegstrecke zwischen Vergleichmäßigungszone 28 und Extruderkopf 1 sehr kurz ist, würde bei einem etwaigen Farbwechsel ein unmittelbares Umsteigen auf die nächste Farbe direkt möglich sein, wobei sich dergestalt die Ausschußrate an nicht gewünschter Farbgebung oder verfärbtem Material sich weitgehend reduzieren läßt.

Sofern, was im Stand der Technik aufgezeigt ist, im sog. MasterbatchBetrieb Titandioxid als Farbpigment dem Kunststoffmaterial, beispielsweise in Form eines Polypropylenmaterials, zugeführt wird, erniedrigt sich der Schmelzflußindex MFI bei einer nachvollzogenen Vergleichsmessung auf 46 g pro 10 Min., was zur Folge hat, dass bei dem dahingehenden Einfärbeverfahren eine deutlich höhere Formgebungstemperatur zu wählen ist, um das für die Kavitäten benötigte Schmelzformverhalten des Kunststoffmaterials bei vergleichbarer Fertigungssituation noch sicherstellen zu können. Letzteres führt aber zu einer hohen thermischen Belastung des Kunststoffmaterials, was letztendlich die Schranken aufzeigt für eine freie Formgebung, so dass sich dergestalt nur Standardverschlüsse mit relativ großen geometrischen Abmessungen einfärben lassen. Das Herstellen von Mikrohaftverschlußsystemen ist dergestalt nicht möglich. Es hat sich gezeigt, dass mit der Erhöhung der Schmelzflußindexwerte von der Enthalpiebetrachtung her eine größere Wärmemenge bleibend in das Kunststoffmaterial einbringbar ist, das dergestalt ein verbessertes Formgebungsverhalten vorgibt, und es ist überraschend, dass durch geeignete Wahl des Zusatzes sich die freie Kristallbildung im Kunststoffmaterial derart steuern läßt, dass auch mechanische Kenngrößen, wie Flexibilität und Zähigkeit, sich in einem weiten Rahmen vorgeben lassen, was mit den bisher bekannten Eintragsystemen (Titandioxid) nicht möglich ist.

Das erfindungsgemäße Verfahren eignet sich insbesondere zum Herstellen sog. Mikro- oder Nanohaftverschlüsse, bei denen die einzelnen Verhakungselemente eine Höhe und/oder Breite aufweisen, die zwischen 0,05 mm und 1 cm liegt, insbesondere im Wertebereich von 0,6 mm bis 1 mm liegt. Dergestalt können dann bis zu 500 Verhakungsmittel pro Quadratzentimeter der herzustellenden Trägerbahn 10 vorgesehen werden. Es besteht bei einer bevorzugten Ausführungsform der erfindungsgemäßen Lösung aber auch die Möglichkeit, bis zu 16.000 Haftelemente und mehr auf einen Quadratzentimeter Trägerbahn 10 anzuordnen. Von der Oberseite der Trägerbahn 10 aus gerechnet bis zum Abschluß des jeweiligen Verhakungs-oder Haftelementes über die plane Kopfoberseite weist jedes dahingehende Element eine Höhe von etwa 100 µm auf, wobei die planen Kopfoberseiten einen Durchmesser von etwa 50 µm haben, die sich in Richtung zum oberen Ende des Stielteiles 17 bis auf eine Größe von etwa 30 µm verringern können. Insoweit ist zwischen Kopfteil 16 und Stielteil 17 an der Stelle des Übergangs ein Hinterschnitt gebildet. Die Höhe des Kopfteils 16 beträgt etwa 10 µm und die Größe des radialen Überstandes von Kopfteil 16 zu oberem Ende von Stengelteil 17 beträgt auch gleichfalls ca. 10 µm. Die Abstände zwischen der Begrenzung von einander benachbart gegenüberliegenden Kopfteilen 16 betragen 30 µm bis 40 µm. Der Durchmesser der Stielteile 17 liegt bei etwa 20 µm bis 35 µm. Die dahingehenden Größenverhältnisse sind nur beispielhaft und können im genannten Größenrahmen geändert werden. Mit dem erfindungsgemäßen Verfahren ist es erstmals möglich, dahingehend Kleinst- oder Mikrohaftverschlüsse durchgehend mit einer Farbe zu versehen, was mit den konventionellen Verfahren nicht möglich ist.

## Patentansprüche

1. Verfahren zum Herstellen einer Trägerbahn (10), bestehend aus einer vorgebbaren Menge an Kunststoffmaterial, mit einer Vielzahl an Formelementen (16,17), die in Formhohlräumen (12) eines Formwerkzeuges (5) geformt werden, wobei das Kunststoffmaterial über mindestens eine Extruderdüse (1) einer Extrudereinrichtung (18) dem Formwerkzeug (5) zugeführt wird, **dadurch gekennzeichnet, dass** das Kunststoffmaterial intrinsisch mit einer Flüssigfarbe versehen wird, welche aus einer Farbstoffphase und einer Gleitmittelphase gebildet ist, dass die Flüssigfarbe, mittels einer Dosiereinrichtung (30) von außen der Extrudereinrichtung (18) an der Stelle zugeführt wird, an der das Kunststoffmaterial zumindest teilweise plastifiziert vorliegt, so dass der Schmelzflußindex (MFI) des Kunststoffmaterials konstant bleibt, vorzugsweise ansteigt, und mittels der Gleitmittelphase das Einformverhalten des Kunststoffmaterials in die Hohlräume des Formwerkzeuges bei vorzugsweise gleichzeitig reduzierter Einformungstemperatur verbessert wird.

2. Verfahren nach Anspruch 1, **dadurch gekennzeichnet, dass** als Farbstoff für die Farbstoffphase Ultramarin eingesetzt wird.

3. Verfahren nach Anspruch 1 oder 2, **dadurch gekennzeichnet, dass** bezogen auf das eingetragene Kunststoffmaterial der Anteil an dem Zusatz etwa 0,05 bis 5 Gew%, vorzugsweise 0,2 bis 0,6 Gew%, besonders bevorzugt um 0,5 Gew% beträgt.

4. Verfahren nach einem der Ansprüche 1 bis 3, **dadurch gekennzeichnet, dass** als Gleitmittelphase des Zusatzes Fettsäureester, Fettsäureesterethoxylathe, Paraffinöle, Pflanzenöle, wie biologisch abbaubares Rapsöl, oder Kombinationen hiervon eingesetzt werden.

5. Verfahren nach einem der Ansprüche 1 bis 4, **dadurch gekennzeichnet, dass** der Zusatz mit weiteren Bestandteilen versehen wird, wie Weichmachern, mehrwertigen Alkoholen, Aminen sowie Alkoholethoxylathen.

6. Verfahren nach einem der Ansprüche 1 bis 5, **dadurch gekennzeichnet, dass** mittels der Dosiereinrichtung (30) abhängig vom Plastifizierungszustand des Kunststoffmaterials und/oder der Temperatur (T) desselben, derart eine variable Menge an Flüssigfarben zugeführt wird, dass der Einfärbungsgrad für die Trägerbahn (10) mit Formelementen (16,17) gleichbleibend gestaltet wird.

7. Verfahren nach einem der Ansprüche 1 bis 6, **dadurch gekennzeichnet, dass** die Trägerbahn (10) und/oder die Formelemente (16,17) coextrudiert werden oder aus coextrudierbaren Einzelschichten zusammengesetzt werden.

8. Verfahren nach Anspruch 7, **dadurch gekennzeichnet, dass** bei der Coextrusion für jede Einzelschicht eine eigene Extrudereinrichtung (18) mit Extruderdüse (1) und Farbdosiereinrichtung (30) vorgesehen wird.

9. Verfahren nach einem der Ansprüche 1 bis 8, **dadurch gekennzeichnet, dass** die Flüssigfarbe innerhalb der Extrudereinrichtung (18) mittels der Dosiereinrichtung (30) an einer Stelle, i.e Vergleichmäßigungszone (28), zugeführt wird, bei der das Kunststoffmaterial in die Extruderdüse (1) gelangt.

## Claims

1. A process for the production of a support web (10) made of a definable amount of plastic material with a plurality of moulded elements (16, 17) shaped in mould cavities (12) of a moulding tool (5), the plastic material being supplied to the moulding tool (5) via at least one extruder nozzle (1) of an extruder device (18), **characterised in that** the plastic material is intrinsically provided with a liquid dye which is formed from a dye phase and a lubricant phase, that the liquid dye is delivered from outside of the extruder device (18) by means of a metering device (30) to the point at which the plastic material is at least partially plasticised so that the melt flow index (MFI) of the plastic material remains constant, and preferably rises, and by means of the lubricant phase the moulding characteristics of the plastic material into the cavities of the moulding tool are improved with preferably simultaneously reduced moulding temperature.

2. The process according to Claim 1, **characterised in that** ultramarine is used as the dye for the dye phase.

3. The process according to Claim 1 or 2, **characterised in that** in relative to the plastic material added, the proportion of additive is approximately 0.05 to 5 % by weight, preferably 0.2 to 0.6 % by weight, particularly preferably 0.5 % by weight.

4. The process according to any of Claims 1 to 3, **characterised in that** fatty acid esters, fatty acid ester ethoxylates, paraffin oils, plant oils such as biodegradable rapeseed oil, or combinations of the latter are used as the lubricant phase of the additive.

5. The process according to any of Claims 1 to 4, **characterised in that** the additive is provided with further components, such as softeners, multivalent alcohols, amines and alcohol ethoxylates.

6. The process according to any of Claims 1 to 5, **characterised in that** depending on the plasticisation state of the plastic material and/or the temperature (T) of the latter, a variable amount of liquid dyes is supplied by the metering device (30) such that the degree of colouring for the support web (10) with the moulded elements (16, 17) is uniform.

7. The process according to any of Claims 1 to 6, **characterised in that** the support web (10) and/or the moulded elements (16, 17) are coextruded or are made up of coextrudable individual layers.

8. The process according to Claim 7, **characterised in that** for the coextrusion a particular extruder device (18) with an extruder nozzle (1) and a dye metering device (30) is provided for each individual layer

9. The process according to any of Claims 1 to 8, **characterised in that** the liquid dye is supplied within the extruder device (18) by the metering device (30) to a point, i.e. the homogenisation zone (28), at which the plastic material passes into the extruder nozzle (1).

## Revendications

1. Procédé de fabrication d'une bande (10) support constitué d'une quantité pouvant être prescrite de matière plastique et ayant une pluralité d'éléments (16, 17) moulés, qui sont moulés dans des empreintes (12) de moule d'un outil (5) de moulage, la matière plastique étant apportée à l'outil (5) de moulage par au moins une filière (1) d'extrudeuse d'un dispositif (18) d'extrusion, **caractérisé en ce qu'**on munit la matière plastique intrinsèquement d'un colorant liquide, qui est formé d'une phase de colorant et d'une phase d'agent de démoulage, **en ce que** l'on envoie le colorant liquide au moyen d'un dispositif (30) d'addition dosée de l'extérieur au dispositif (18) d'extrusion à l'emplacement où la matière plastique se présente plastifiée au moins en partie, de manière à ce que l'indice de fluidité à l'état fondu (MFI) de la matière plastique reste constant, de préférence augmente, et, à l'aide de la phase de l'agent de démoulage, le comportement de moulage de la matière plastique dans les empreintes de l'outil de moulage est amélioré tout en ayant, de préférence en même temps, une température de moulage réduite.

2. Procédé suivant la revendication 1, **caractérisé en ce que** l'on utilise comme colorant pour la phase de colorant de l'outremer.

3. Procédé suivant la revendication 1 ou 2, **caractérisé en ce que**, rapportée à la matière plastique engagée, la proportion d'additif représente environ de 0,05 à 5% en poids, de préférence de 0,2 à 0,6% en poids, en étant d'une manière particulièrement préférée de 0,5% en poids.

4. Procédé suivant l'une des revendications 1 à 3, **caractérisé en ce que** l'on utilise comme phase d'agent de démoulage de l'additif des esters d'acide gras, des esters éthoxylates d'acide gras, des huiles de paraffine, des huiles végétales, comme de l'huile de colza décomposable biologiquement, ou leurs combinaisons.

5. Procédé suivant l'une des revendications 1 à 4, **caractérisé en ce que** l'on munit l'additif d'autres constituants comme des plastifiants, des polyalcools, des amines, ainsi que des éthoxylates d'alcool.

6. Procédé suivant l'une des revendications 1 à 5, **caractérisé en ce que** l'on apporte au moyen du dispositif (3) d'addition dosée une quantité variable de colorant liquide en fonction de l'état de plastification de la matière plastique et/ou de sa température (T), de manière à ce que le degré de coloration de la bande (10) support ayant des éléments (16, 17) moulés reste constant.

7. Procédé suivant l'une des revendications 1 à 6, **caractérisé en ce que** la bande (10) support et/ou les éléments (16, 17) sont coextrudés ou sont composés de couches individuelles pouvant être coextrudées.

8. Procédé suivant la revendication 7, **caractérisé en ce que** l'on prévoit pour la coextrusion de chaque couche individuelle un dispositif (18) d'extrusion propre, ayant une filière (1) d'extrudeuse et un dispositif (30) d'addition dosée de colorant.

9. Procédé suivant l'une des revendications 1 à 8, **caractérisé en ce que** l'on envoie le colorant liquide à l'intérieur du dispositif (18) d'extrusion à l'aide du dispositif (30) d'addition dosée en un emplacement, par exemple en une zone (28) d'homogénéisation, dans laquelle la matière plastique arrive dans la filière (1) de l'extrudeuse.
